# EUROPEAN PATENT SPECIFICATION

(11) **EP 3 025 573 B1**
(45) Date of publication and mention of the grant of the patent: **02.10.2019**
(21) Application number: 15196369.1
(22) Date of filing: 25.11.2015
(51) Int. Cl.: A01D 34/416

(54) **LINE FEED MECHANISM FOR STRING TRIMMER**
VORSCHUBMECHANISMUS FÜR FADENSCHNEIDER
MÉCANISME D'ALIMENTATION DE FIL POUR TONDEUSE À FIL

(30) Priority: 25.11.2014 US 201414552682
(43) Date of publication of application: 01.06.2016
(73) Proprietor: Black & Decker Inc., Newark, Delaware 19711 (US)
(72) Inventor: Poole, Brian, Lutherville, MD Maryland 21093 (US); Sergyeyenko, Oleksiy P., Baldwin, MD Maryland 21013 (US)
(74) Representative: SBD IPAdmin

(56) References cited:
- EP-A1- 0 583 737
- US-A- 5 020 224

## Description

The present disclosure relates to a string trimmer having a line pay-out mechanism.

This section provides background information related to the present disclosure which is not necessarily prior art.

String trimmers having "auto-feed" line pay-out mechanism are known in the art as is known from references such as EP 0 417 966, EP 0 417 967, US 6594907, US 5603673 and US 4607431. In brief, such auto-feed line pay-out mechanisms typically employ a reference weight that is counteracted by an inertial force associated with one or more line segments of the trimmer line that extend from a spool assembly. In situations where the moment that results from the inertial force that is associated with the line segment(s) is greater than an opposing moment that results from an inertial force that is associated with the reference weight, the auto-feed mechanism inhibits relative rotation of a spool so that trimming line is not paid-out from the spool. In situations where the moment that results from the inertial force that is associated with the line segment(s) is less than the opposing moment that results from the inertial force that is associated with the reference weight, the auto-feed mechanism permits relative rotation of the spool so that trimming line is paid-out from the spool.

While such mechanisms are suited for their intended purpose, there are several disadvantages. One disadvantage concerns the need for ensuring that the reference weight is properly designed and manufactured. As those of ordinary skill in the art will appreciate, errors in the manufacture of the reference weight can adversely affect the manner in which the auto-feed line pay-out mechanism will operate, feeding out too much, too little or no line at all. Additionally, because of the delicate nature of the balancing, minor impacts on the lines create force imbalances and inadvertently feed additional line.

EP 0 583 737 discloses a trigger for the adjustment of a tool. The adjustment can be triggered by the brief braking and/or acceleration of the drive via a foot-operated button, with the result that, for this purpose, the appliance head does not need either to be swung open or to be accessible from its working side.

US 5 020 224 discloses a string trimmer head with an indexing mechanism. Trimmer line is indexed out during each rotational start-up.

Additional mechanisms for feeding line are described in US 4426780 or US 4245454, the disclosures of which are hereby incorporated by reference as if fully set forth in detail herein. The US '780 patent describes a string trimmer that is configured to pay out line from a spool in response to deceleration of a driving portion relative to a spool when the electric motor of the string trimmer is turned off. The US '454 patent describes a string trimmer that is configured to pay out line from a spool in response to the operation of a mechanical brake mechanism that slows rotation of a motor shaft and a spool relative to a guide drum. However, these design are overly complex.

Accordingly, there remains a need in the art for a spool assembly with a line pay-out mechanism that does not require a reference weight with a relatively tight weight tolerance and will feed out line only when intended. Those of skill in the art will appreciate that the motor braking/reversal technique disclosed herein can be effective with such line-feed mechanisms to cause trimmer line to be paid-out from a spool.

This section provides a general summary of the disclosure, and is not a comprehensive disclosure of its full scope or all of its features.

The present invention provides a string trimmer according to appended claim 1 and a method for operating a string trimmer according to appended claim 11.

Also disclosed herein is a string trimmer that includes an electric motor, a rotatable output member driven by the electric motor, a handle coupled to the electric motor, a spool assembly and a controller. The spool assembly is configured to hold a trimming line such that the trimming line has one or more line segments that extend from the spool assembly. The spool assembly has a spool housing, a spool and a line pay-out mechanism. The spool is coupled to the output member and is configured such that the trimming line is wound thereon. The line pay-out mechanism is configured to control rotation of the spool relative to the output member to pay-out the trimming line from the spool in response to a difference between a first moment and a second moment. The first moment is generated by inertia of the one or more line segments. The second moment is generated by inertia of a reference weight and opposes the first moment. The controller is coupled to the electric motor and is configured to selectively control the electric motor select a line pay-out mode that generates a third moment that opposes the first moment. The line pay-out mechanism is operable in a pay-out mode to permit the spool to rotate relative to the output member to pay-out trimming line when a sum of the second and third moments is greater than the first moment.

Also disclosed herein is a method for operating a string trimmer. The method includes providing a string trimmer with an electric motor, an output member driven by the electric motor and a spool assembly, the spool assembly having a spool housing, a spool and a line pay-out mechanism, the spool having a cavity onto which a trimmer line is wound, the line pay-out mechanism being operable in a pay-out mode to permit the spool to rotate relative to the output member to pay-out trimmer line from the spool; operating the electric motor in a trimming mode in which the electric motor operates in a first rotational direction to drive the output member, wherein inertial forces acting on the line pay-out mechanism prevent relative movement of the spool relative to the output member so that the trimming line is not paid-out from the spool assembly; and operating the electric motor in a line pay-out mode to generate a line pay-out moment that opposes a line moment that is generated by inertial forces associated with one or more segments of the trimmer line that extend from the spool assembly; wherein the line pay-out mechanism operates to pay-out trimmer line from the spool assembly when a sum of moments acting on the spool assembly is non-zero and acts in the rotational direction of the line pay-out moment.

Also disclosed herein is a string trimmer that includes an electric motor, an output member, a handle, a switch, and a spool assembly. The electric motor has a motor shaft and is operable in a trimming mode and a line pay-out mode. The motor shaft is driven in a first rotational direction when the electric motor is operated in the trimming mode. The electric motor produces a line pay-out moment that is directed in a second rotational direction opposite the first rotational direction when the electric motor is operated in the line pay-out mode. The output member is driven by the motor shaft. The handle is coupled to the electric motor. The switch is coupled to the electric motor and is configured to selectively operate the electric motor in the line pay-out mode. The spool assembly is configured to hold a trimming line such that the trimming line has one or more line segments that extend from the spool assembly. The spool assembly has a spool housing, a spool and a line pay-out mechanism. The spool is coupled to the output member and configured such that the trimming line is wound thereon. The line pay-out mechanism is configured to control rotation of the spool relative to the output member to pay-out the trimming line from the spool. Inertial forces acting on the line pay-out mechanism when the electric motor is operated in the trimming mode prevent rotation of the spool relative to the output member so that the trimming line is not paid-out from the spool assembly. The line pay-out mechanism is operable in a pay-out mode to permit the spool to rotate relative to the output member to pay-out trimming line when a sum of moments acting on the spool assembly is non-zero and acts in the rotational direction of the line pay-out moment.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations, and are not intended to limit the scope of the present disclosure.
Figure 1 is a perspective view of an exemplary string trimmer constructed in accordance with the teachings of the present disclosure;
Figure 2 is a side elevation view in partial section of a portion of the string trimmer of Figure 1 that illustrates a powerhead of the string trimmer in more detail;
Figure 3 is a perspective view of a portion of the string trimmer of Figure 1 that illustrates a handle of the string trimmer in more detail;
Figure 4 is a top plan view of a portion of the string trimmer of Figure 1 that illustrates a portion of a line pay-out mechanism that is incorporated into a cap member of a spool assembly;
Figure 5 is a bottom plan view of a portion of the string trimmer of Figure 1 that illustrates another portion of the line pay-out mechanism that is incorporated into a spool of the spool assembly;
Figure 6A is a schematic view of a controller in a first embodiment showing an electric motor in normal mode;
Figure 6B is a schematic view of the controller of Fig. 6A, showing the motor in a line pay-out mode; and
Figure 7 is a schematic view of another controller constructed in accordance with the teachings of the present disclosure.

Corresponding reference numerals indicate corresponding parts throughout the several views of the drawings.

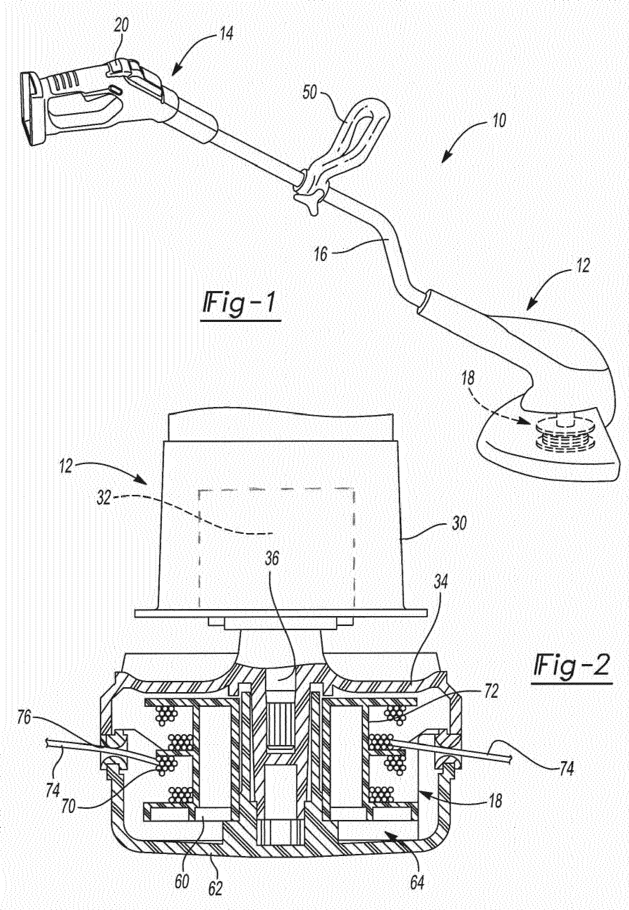

With reference to Figure 1 of the drawings, a string trimmer constructed in accordance with the teachings of the present disclosure is generally indicated by reference numeral 10. The string trimmer 10 can be constructed in a manner that is disclosed in any of EP 0 417 966, EP 0 417 967, US 6594907, US 5603673 and US 4607431. Briefly, such a string trimmer 10 includes a powerhead 12, a handle 14, a pole member 16, a spool assembly 18 and a controller 20.

With reference to Figure 2, the powerhead 12 includes a powerhead housing 30 and an electric motor 32 with an output member 36. The powerhead housing 30 can define a cavity into which the electric motor 32 can be received. The electric motor 32 can be any type of electric motor, such as a DC electric motor or an AC electric motor. In the particular example provided, the electric motor 32 is a DC electric motor.

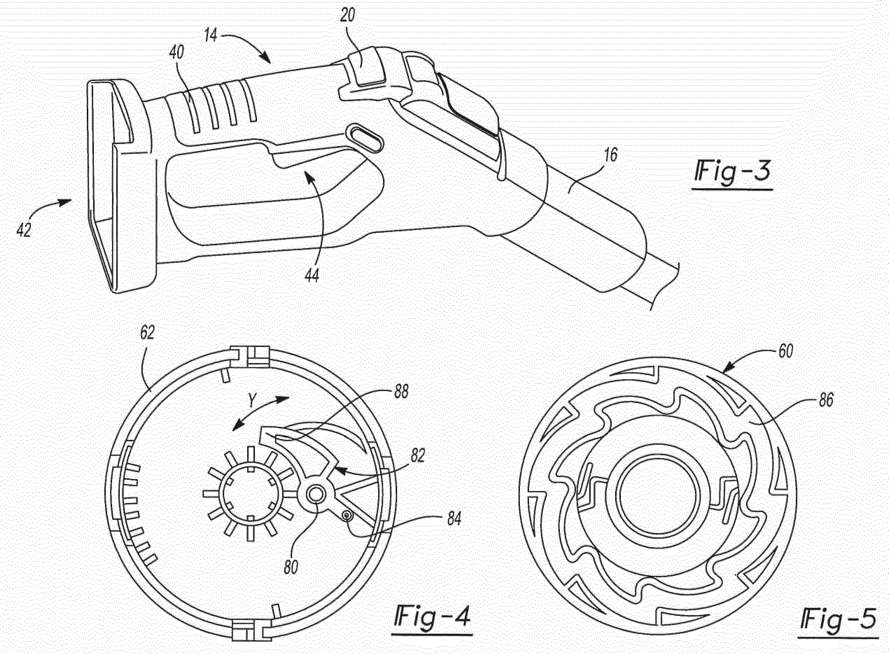

In Figures 1 and 3, the handle 14 can be configured with a handle member 40, a power inlet 42 and a trigger switch 44. The handle 14 is conveniently configured to be gripped by a user of the string trimmer 10. The power inlet 42 is configured to receive electrical power from an appropriate power source. In the particular example provided, the power inlet 42 is configured to mechanically and electrically engage with a battery pack (not shown) that provides a source of DC electrical power. The trigger switch 44 can be electrically coupled to the power inlet 42 and the electric motor 32 and configured to control the supply of electrical power to the electric motor 32. The trigger switch 44 can comprise a variable speed switch that is responsive to the positioning of a trigger element relative to the handle 14.

The pole member 16 can interconnect the handle 14 and the powerhead 12. In the example provided, the pole member 16 is a discrete structure that is formed of a tubular metal and configured to house wiring that runs between the handle 14 and the powerhead 12. It will be appreciated, however, that the pole member 16 could be unitarily formed with the handle 14 and/or the powerhead housing 30.

With reference to Figure 2, the spool assembly 18 can comprise a spool housing 34, spool 60, a cap member 62 and comprises a line pay-out mechanism 64. The spool housing 34 is fixedly secured to the output member 36 of the motor 32 for rotation therewith. The spool 60 is coupled to the spool housing 34 and configured to hold a trimming line 70, which can be wound about a line holding portion 72 of the spool 60. The trimming line 70 can have one or more line segments 74 that extend from the spool assembly 18. In the example provided, grommets 76 are provided in the spool housing 34 and receive the line segments 74. The cap member 62 has resilient legs that engage an edge of the spool housing 34 to permit the cap member 62 to be snap-fit to the spool housing 34 and the cap member 62 and the spool housing 34 cooperate to define a cavity into which the spool 60 is received.

With reference to Figures 2, 4 and 5, the line pay-out mechanism 64 is configured to control rotation of the spool 60 relative to the spool housing 34 (and output member 36) and consequently, control the pay-out of trimming line 70 from the spool 60. In the particular embodiment provided, the line pay-out mechanism 64 is similar to the mechanism described in U.S. Pat. No. 6,594,907 and includes a pin 80, a pivot arm 82 (which includes both a control peg 84 and a weight section 88) and a control groove 86. The pivot arm 82 is pivotally mounted to the pin 80, which is fixedly mounted to a first structure, such as the cap member 62. The control peg 84 is received into the control groove 86, which is formed on an end face of the spool 60. It should be understood that the pivot arm 82 and the control groove 86 could be placed in different locations so long as their relationship is maintained and the pay-out mechanism would still operate as described herein. For example, the pivot arm 82 could be positioned on the spool housing 34 and the orientation of the spool 60 flipped.

The line pay-out mechanism 64 is configured to pay-out trimming line 70 in response to a difference between first and second moments that result from inertia generated by the line segments 74 and the reference weight section 88 of the pivot arm 82. As those of skill in the art will appreciate from the above-referenced prior art, the first moment is generated by the inertial forces associated with the line segments 74, and the second moment is generated by the inertial force of the reference weight 88. In normal operation, the first moment is large enough to secure the control peg 84 within the control groove 86 so that the pivot arm 82 is maintained in a stationary position and the control peg 84 is maintained in engagement with a tooth form in the control groove 86. As the line segments 74 shorten (due to wear or breakage) during the use of the string trimmer 10 so that the inertial force produced by the line segments 74 (and the corresponding first moment) are correspondingly reduced. When the second moment, which opposes the first moment, exceeds a set reference point, the pivot arm 82 will rotate about the pin 80 and the line pay-out mechanism 64 can operate in a pay-out mode to pay-out the trimming line 70. More specifically, when the second moment exceeds the forces acting on the control peg 84 by the control groove 86 to resist in movement (including the first moment, any frictional forces between the control peg 84 and the control groove 86), the pivot arm 82 can pivot about the pin 80, causing the control peg 84 to disengage the tooth form in the control groove 86 so that the spool 60 can rotate a predetermined amount relative to the output member (and thereby pay-out the trimming line 70).

According to the invention, the reference weight is sized such that the second moment alone is never sufficient to cause the line pay-out mechanism 64 to operate in the pay-out mode.

With reference to Figures 3, 6A, 6B and 7, the trigger 44 must be actuated to energize the motor 32 for the line pay-out mechanism to operate. The controller 20 can be coupled to the electric motor 32 and can be configured to selectively control the electric motor 32 in a line pay-out mode that electrically brakes or reverses the electric motor 32 and cause the line pay-out mechanism 64 to operate in a pay-out mode that permits the spool 60 to rotate relative to the output member 34 to pay-out trimming line 70. When operated in the line pay-out mode, the electric motor 32 generates a third moment that can oppose the first moment. The line pay-out mechanism 64 is operated in the pay-out mode when the sum of the second and third moments exceeds the first moment.

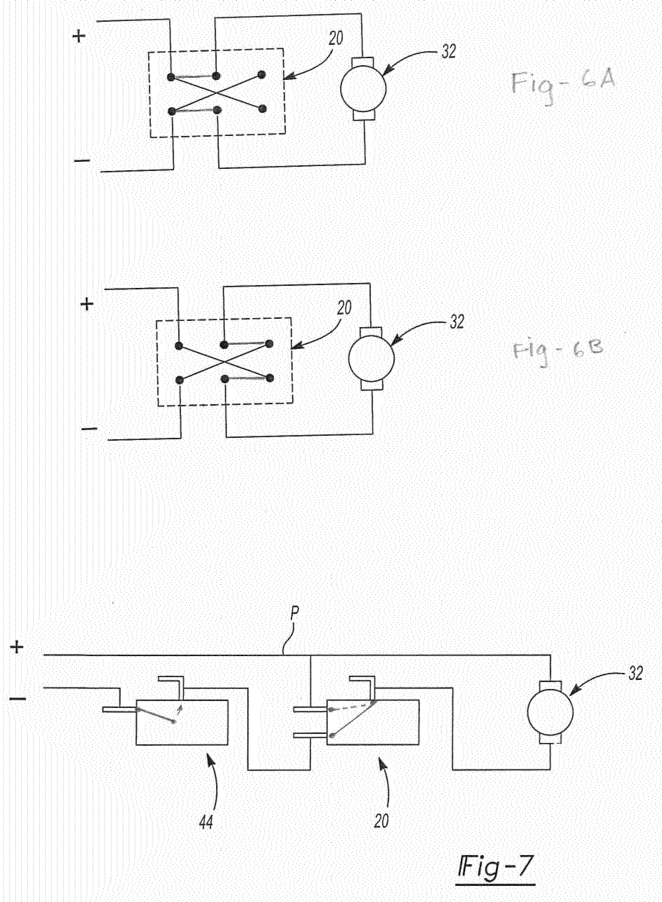

The controller 20 can be any type of mechanism that can control the operation of the electric motor. In the particular example provided in Fig. 7, the controller 20 comprises a switch that is configured to "short" the DC electric motor 32 and brake its rotation. The switch is shown in a first, normal position by the solid line, and in a second, "shorting" position shown by the dashed line. The switch can be any type of switch, but we have found that as the third moment need not be maintained for a significant period of time, a momentary switch is well suited for the task. This braking provides the third moment that initiates the line pay-out mode.

In the another example shown in Figs. 6A and 6B, the controller 20 is part of a double pole, double throw (DPDT) switch that can be operated in a first (normal) switch mode (Fig. 6A), which supplies DC electrical current to the electric motor 32 in a first direction, and a second (line-payout) switch mode (Fig. 6B) that supplies electrical current to the electric motor 32 in a second direction, opposite direction. In the second mode, the kinetic energy of the motor 32 continues to drive it in the first direction, but the power being supplied urges the motor 32 in the second direction which effectuates a braking effect.

Therefore, by braking the motor, a strong third moment is created which overcomes the first moment to actuate the line pay-out mechanism. This strong third moment eliminates the delicate balancing required with the pivot arm 82 and furthermore, allows the pivot arm to be calibrated so that small bumps and other impacts on the line do not inadvertently initiate the line pay-out mechanism.

Additinally, those skilled in the art will appreciate that an AC motor supplied by AC power can be braked in a similar fashion as the DC motor described above.

The foregoing description of the embodiments has been provided for purposes of illustration and description. It is not intended to be exhaustive. Individual elements or features of a particular embodiment are generally not limited to that particular embodiment.

## Claims

1. A string trimmer (10) comprising:
an electric motor (32);
a rotatable output member (36) driven by the electric motor;
a handle (14) coupled to the electric motor; and
a spool assembly (18) that is adapted to hold a trimming line (70) such that the trimming line has one or more line segments (74) that extend from the spool assembly, the spool assembly having a spool housing (34), a spool (60) and a line pay-out mechanism (64), the spool being driven by the output member and configured such that the trimming line is wound thereon, the line pay-out mechanism being configured to control rotation of the spool relative to the output member, wherein
the line pay-out mechanism (64) includes a pivot arm (82) with a weighted section (88) and a control peg (84), and a corresponding control groove (86), the control peg being positioned in the control groove to control rotation of the spool (60) relative to the output member (36);
a first moment is generated by the inertial forces associated with the trimming line, a second moment is generated by the inertial force of the weighted section, and a third moment is generated by the braking of the motor;
**characterised in that**: the line pay-out mechanism is configured such that the second moment alone is never sufficient to actuate the line pay-out mechanism and such that the third moment in combination with the second moment actuates the line pay-out mechanism.

2. A string trimmer as claimed in claim 1 and further comprising a controller (20) coupled to the electric motor and configured to selectively brake the electric motor, wherein electrical braking of the motor causes the line pay-out mechanism to operate in a pay-out mode to permit the spool to rotate relative to the output member to pay-out trimming line.

3. The string trimmer of claim 1 or claim 2, wherein the electric motor (32) is housed in a powerhead assembly (12).

4. The string trimmer of any preceding claim wherein the handle (14) includes a trigger (44) to control power to the motor (32) to operate the motor in a normal mode where no line is paid out, and the controller (20) comprises a switch to brake the motor and actuate the line pay-out mechanism (64).

5. The string trimmer of claim 4, wherein the controller (20) is positioned on the handle (14) in close proximity to the trigger (44) so that a user can control both the trigger and controller with one hand.

6. The string trimmer of claim 4 or 5, wherein the switch is a momentary switch.

7. The string trimmer of any preceding claim, wherein the electric motor (32) is a DC electric motor.

8. The string trimmer of claim 1, wherein the pivot arm (82) is positioned on one of the spool housing (34) or a cap (62) to the spool housing, and the control grooves (86) is located on the spool (60).

9. The string trimmer of claim 2, wherein the controller (20) shorts the motor (32) to provide the braking effect.

10. The string trimmer of claim 2, wherein the controller (20) is a DPDT switch which urges the motor (32) in a reverse direction to provide the braking effect.

11. A method for operating a string trimmer (10) comprising:
providing a string trimmer with an electric motor (32), an output member (36) driven by the electric motor and a spool assembly (18), the spool assembly having a spool (60) and a line pay-out mechanism (64), the spool having a cavity onto which a trimmer line is wound, the line pay-out mechanism being operable in a pay-out mode to permit the spool to rotate relative to the output member to pay-out trimmer line from the spool;
providing a trigger (44) on a handle (14) of the string trimmer to provide power to the motor;
providing a controller (20) to effectuate a braking effect on the motor, wherein the braking effect actuates the pay-out mode;
actuating the trigger to operate the motor in a trimming mode in which the electric motor operates in a first rotational direction to drive the output member, wherein inertial forces acting on the line pay-out mechanism prevent relative movement of the spool relative to the output member so that the trimming line is not paid-out from the spool assembly; and
actuating the controller to pay out additional line, wherein the braking of the motor generates inertial forces that actuate the line pay-out mechanism to extend trimmer line from the spool assembly;
wherein the line pay-out mechanism (64) includes a pivot arm (82) with a weighted section (88) and a control peg (84), and a corresponding control groove (86), the control peg being positioned in the control groove to control rotation of the spool (60) relative to the output member (36);
a first moment is generated by the inertial forces associated with the trimming line, a second moment is generated by the inertial force of the weighted section, and a third moment is generated by the braking of the motor;
**characterised in that**:
the line pay-out mechanism is configured such that the second moment alone is never sufficient to actuate the line pay-out mechanism and such that the third moment in combination with the second moment actuates the line pay-out mechanism.

12. The method of claim 11, wherein actuating the controller only momentarily brakes the motor, and the motor resumes trimming mode.

## Patentansprüche

1. Fadenschneider (10), umfassend:
einen Elektromotor (32);
ein drehbares Ausgangselement (36), das vom Elektromotor angetrieben wird;
einen Griff (14), der mit dem Elektromotor gekoppelt ist; und
eine Spulenbaugruppe (18), die dazu geeignet ist, eine Schneidschnur (70) derart zu halten, dass die Schneidschnur ein oder mehrere Schnursegmente (74) aufweist, die sich von der Spulenbaugruppe erstrecken, wobei die Spulenbaugruppe ein Spulengehäuse (34), eine Spule (60) und einen Schnurabwickelmechanismus (64) aufweist, wobei die Spule vom Ausgangselement angetrieben wird und derart konfiguriert ist, dass die Schneidschnur auf derselben aufgewickelt ist, wobei der Schnurabwickelmechanismus dazu konfiguriert ist, Drehung der Spule relativ zum Ausgangselement zu steuern, wobei
der Schnurabwickelmechanismus (64) einen Schwenkarm (82) mit einem beschwerten Abschnitt (88) und einem Steuerzapfen (84), und eine entsprechende Steuernut (86) enthält, wobei der Steuerzapfen in der Steuernut positioniert ist, um Drehung der Spule (60) relativ zum Ausgangselement (36) zu steuern;
durch die Trägheitskräfte, die mit der Schneidschnur assoziiert sind, ein erstes Moment erzeugt wird, durch die Trägheitskraft des beschwerten Abschnitts ein zweites Moment erzeugt wird, und durch das Bremsen des Motors ein drittes Moment erzeugt wird;
**dadurch gekennzeichnet, dass**:
der Schnurabwickelmechanismus derart konfiguriert ist, dass das zweite Moment alleine niemals ausreicht, um den Schnurabwickelmechanismus zu betätigen, und derart, dass das dritte Moment in Kombination mit dem zweiten Moment den Schnurabwickelmechanismus betätigt.

2. Fadenschneider nach Anspruch 1 und weiter eine Steuerung (20) umfassend, die mit dem Elektromotor gekoppelt und dazu konfiguriert ist, den Elektromotor selektiv zu bremsen, wobei elektrisches Bremsen des Motors den Schnurabwickelmechanismus dazu bringt, in einem Abwickelmodus zu funktionieren, um der Spule zu ermöglichen, relativ zum Ausgangselement zu drehen, um Schneidschnur abzuwickeln.

3. Fadenschneider nach Anspruch 1 oder Anspruch 2, wobei der Elektromotor (32) in einer Antriebskopfbaugruppe (12) untergebracht ist.

4. Fadenschneider nach einem der vorstehenden Ansprüche, wobei der Griff (14) einen Auslöser (44) enthält, um Strom zum Motor (32) so zu steuern, dass der Motor in einem normalen Modus betrieben wird, in dem keine Schnur abgewickelt wird, und die Steuerung (20) einen Schalter umfasst, um den Motor zu bremsen und den Schnurabwickelmechanismus (64) zu betätigen.

5. Fadenschneider nach Anspruch 4, wobei die Steuerung (20) am Griff (14) in enger Nähe zum Auslöser (44) positioniert ist, sodass ein Benutzer sowohl den Auslöser als auch die Steuerung mit einer Hand steuern kann.

6. Fadenschneider nach Anspruch 4 oder 5, wobei der Schalter ein Momentschalter ist.

7. Fadenschneider nach einem der vorstehenden Ansprüche, wobei der Elektromotor (32) ein Gleichstrom-Elektromotor ist.

8. Fadenschneider nach Anspruch 1, wobei der Schwenkarm (82) an einem aus dem Spulengehäuse (34) oder einem Deckel (62) für das Spulengehäuse positioniert ist, und sich die Steuernuten (86) an der Spule (60) befindet.

9. Fadenschneider nach Anspruch 2, wobei die Steuerung (20) den Motor (32) kurzschließt, um die Bremswirkung bereitzustellen.

10. Fadenschneider nach Anspruch 2, wobei die Steuerung (20) ein DPDT-Schalter ist, der den Motor (32) in eine umgekehrte Richtung zwingt, um die Bremswirkung bereitzustellen.

11. Verfahren zum Betreiben eines Fadenschneiders (10), umfassend:
Bereitstellen eines Fadenschneiders mit einem Elektromotor (32), einem Ausgangselement (36), das vom Elektromotor angetrieben wird, und einer Spulenbaugruppe (18), wobei die Spulenbaugruppe eine Spule (60) und einen Schnurabwickelmechanismus (64) aufweist, wobei die Spule einen Hohlraum aufweist, in dem eine Schneidschnur aufgewickelt ist, wobei der Schnurabwickelmechanismus in einem Abwickelmodus betrieben werden kann, um der Spule zu ermöglichen, relativ zum Ausgangselement zu drehen, um Schneidschnur von der Spule abzuwickeln;
Bereitstellen eines Auslösers (44) an einem Griff (14) des Fadenschneiders, um dem Motor Strom bereitzustellen;
Bereitstellen einer Steuerung (20), um eine Bremswirkung auf den Motor auszuüben, wobei die Bremswirkung den Abwickelmodus betätigt;
Betätigen des Auslösers, um den Motor in einem Schneidmodus zu betreiben, in dem der Elektromotor in einer ersten Drehrichtung läuft, um das Ausgangselement anzutreiben, wobei Trägheitskräfte, die auf den Schnurabwickelmechanismus wirken, relative Bewegung der Spule relativ zum Ausgangselement verhindern, sodass die Schneidschnur nicht von der Spulenbaugruppe abgewickelt wird; und
Betätigen der Steuerung, um zusätzliche Schnur abzuwickeln, wobei das Bremsen des Motors Trägheitskräfte erzeugt, die den Schnurabwickelmechanismus betätigen, um Schneidschnur aus der Spulenbaugruppe auszuziehen;
wobei
der Schnurabwickelmechanismus (64) einen Schwenkarm (82) mit einem beschwerten Abschnitt (88) und einem Steuerzapfen (84), und eine entsprechende Steuernut (86) enthält, wobei der Steuerzapfen in der Steuernut positioniert ist, um Drehung der Spule (60) relativ zum Ausgangselement (36) zu steuern;
durch die Trägheitskräfte, die mit der Schneidschnur assoziiert sind, ein erstes Moment erzeugt wird, durch die Trägheitskraft des beschwerten Abschnitts ein zweites Moment erzeugt wird, und durch das Bremsen des Motors ein drittes Moment erzeugt wird;
**dadurch gekennzeichnet, dass**:
der Schnurabwickelmechanismus derart konfiguriert ist, dass das zweite Moment alleine niemals ausreicht, um den Schnurabwickelmechanismus zu betätigen, und derart, dass das dritte Moment in Kombination mit dem zweiten Moment den Schnurabwickelmechanismus betätigt.

12. Verfahren nach Anspruch 11, wobei das Betätigen der Steuerung den Motor nur momentan bremst, und der Motor den Schneidmodus fortsetzt.

## Revendications

1. Tondeuse à fil (10) comprenant :
un moteur électrique (32) ;
un élément de sortie rotatif (36) entraîné par le moteur électrique ;
une poignée (14) couplé au moteur électrique ; et
un ensemble de bobine (18) qui est adapté pour maintenir un fil de coupe (70) de sorte que le fil de coupe présente un ou plusieurs segments de fil (74) qui s'étendent depuis l'ensemble de bobine, l'ensemble de bobine présentant un boîtier de bobine (34), une bobine (60) et un mécanisme de dévidage de fil (64), la bobine étant entraînée par l'élément de sortie et configurée de sorte que le fil de coupe soit enroulé dessus, le mécanisme de dévidage de fil étant configuré pour commander la rotation de la bobine par rapport à l'élément de sortie, dans laquelle
le mécanisme de dévidage de fil (64) inclut un bras de pivotement (82) avec une section pondérée (88) et un tenon de commande (84), et une rainure de commande correspondante (86), le tenon de commande étant positionné dans la rainure de commande pour commander la rotation de la bobine (60) par rapport à l'élément de sortie (36) ;
un premier couple est généré par les forces inertielles associées au fil de coupe, un deuxième couple est généré par la force inertielle de la section pondérée, et un troisième couple est généré par le freinage du moteur ;
**caractérisée en ce que** :
le mécanisme de dévidage de fil est configuré de sorte que le second couple seul ne soit jamais suffisant pour actionner le mécanisme de dévidage de fil et de sorte que le troisième couple en combinaison avec le deuxième couple actionne le mécanisme de dévidage de fil.

2. Tondeuse à fil selon la revendication 1 et comprenant en outre un dispositif de commande (20) couplé au moteur électrique et configuré pour freiner sélectivement le moteur électrique, dans laquelle le freinage électrique du moteur amène le mécanisme de dévidage de fil à fonctionner dans un mode de dévidage pour permettre à la bobine de tourner par rapport à l'élément de sortie pour dévider le fil de coupe.

3. Tondeuse à fil selon la revendication 1 ou la revendication 2, dans laquelle le moteur électrique (32) est logé dans un ensemble de tête motorisée (12).

4. Tondeuse à fil selon l'une quelconque des revendications précédentes, dans laquelle la poignée (14) inclut un déclencheur (44) pour commander la puissance au moteur (32) pour faire fonctionner le moteur dans un mode normal où aucun fil n'est dévidé, et le dispositif de commande (20) comprend un commutateur pour freiner le moteur et actionner le mécanisme de dévidage de fil (64).

5. Tondeuse à fil selon la revendication 4, dans laquelle le dispositif de commande (20) est positionné sur la poignée (14) à proximité serrée du déclencheur (44) de sorte qu'un utilisateur puisse commander à la fois le déclencheur et le dispositif de commande avec une main.

6. Tondeuse à fil selon la revendication 4 ou 5, dans laquelle le commutateur est un commutateur instantané.

7. Tondeuse à fil selon l'une quelconque des revendications précédentes, dans laquelle le moteur électrique (32) est un moteur électrique à courant continu.

8. Tondeuse à fil selon la revendication 1, dans laquelle le bras de pivotement (82) est positionné sur un du boîtier de bobine (34) ou un capuchon (62) sur le boîtier de bobine, et les rainures de commande (86) sont situées sur la bobine (60).

9. Tondeuse à fil selon la revendication 2, dans laquelle le dispositif de commande (20) court-circuite le moteur (32) pour fournir l'effet de freinage.

10. Tondeuse à fil selon la revendication 2, dans laquelle le dispositif de commande (20) est un commutateur DPDT qui pousse le moteur (32) dans une direction inverse pour fournir l'effet de freinage.

11. Procédé de fonctionnement d'une tondeuse à fil (10) comprenant :
la fourniture d'une tondeuse à fil avec un moteur électrique (32), un élément de sortie (36) entraîné par le moteur électrique et un ensemble de bobine (18), l'ensemble de bobine présentant une bobine (60) et un mécanisme de dévidage de fil (64), la bobine présentant une cavité sur laquelle un fil de coupe est enroulé, le mécanisme de dévidage de fil étant actionnable dans un mode de dévidage pour permettre à la bobine de tourner par rapport à l'élément de sortie pour dévider le fil de coupe de la bobine ;
la fourniture d'un déclencheur (44) sur une poignée (14) de la tondeuse à fil pour fournir de la puissance au moteur ;
la fourniture d'un dispositif de commande (20) pour effectuer un effet de freinage sur le moteur, dans lequel l'effet de freinage actionne le mode de dévidage ;
l'actionnement du déclencheur pour faire fonctionner le moteur dans un mode de coupe dans lequel le moteur électrique fonctionne dans une première direction de rotation pour entraîner l'élément de sortie, dans lequel des forces inertielles agissant sur le mécanisme de dévidage de fil empêchent le mouvement relatif de la bobine par rapport à l'élément de sortie de sorte que le fil de coupe ne soit pas dévidé de l'ensemble de bobine ; et
l'actionnement du dispositif de commande pour dévider le fil supplémentaire, dans lequel le freinage du moteur génère des forces inertielles qui actionnent le mécanisme de dévidage de fil pour étendre le fil de coupe de l'ensemble de bobine ;
dans lequel le mécanisme de dévidage de fil (64) inclut un bras de pivotement (82) avec une section pondérée (88) et un tenon de commande (84), et une rainure de commande correspondante (86), le tenon de commande étant positionné dans la rainure de commande pour commander la rotation de la bobine (60) par rapport à l'élément de sortie (36) ;
un premier couple est généré par les forces inertielles associées au fil de coupe, un deuxième couple est généré par la force inertielle de la section pondérée, et un troisième couple est généré par le freinage du moteur ;
**caractérisé en ce que** :
le mécanisme de dévidage de fil est configuré de sorte que le deuxième couple seul ne soit jamais suffisant pour actionner le mécanisme de dévidage de fil et de sorte que le troisième couple en combinaison avec le deuxième couple actionne le mécanisme de dévidage de fil.

12. Procédé selon la revendication 11, dans lequel l'actionnement du dispositif de commande freine seulement momentanément le moteur, et le moteur reprend le mode de coupe.
